**Europäisches Patentamt**

(19) **European Patent Office**

**Office européen des brevets**

(11) Veröffentlichungsnummer: **0 166 890**
**B1**

(12) **EUROPÄISCHE PATENTSCHRIFT**

(45) Veröffentlichungstag der Patentschrift:
**14.12.88**

(21) Anmeldenummer: **85104880.1**

(22) Anmeldetag: **22.04.85**

(51) Int. Cl.⁴: **G 11 B 5/31**, G 11 B 5/265

(54) Dünnschicht-Magnetkopf mit einem Doppelspalt für ein senkrecht zur magnetisierendes Aufzeichnungsmedium.

(30) Priorität: **04.05.84 DE 3416544**
**21.01.85 DE 3501810**

(43) Veröffentlichungstag der Anmeldung:
**08.01.86 Patentblatt 86/2**

(45) Bekanntmachung des Hinweises auf die Patenterteilung:
**14.12.88 Patentblatt 88/50**

(84) Benannte Vertragsstaaten:
**AT CH DE FR GB IT LI NL SE**

(56) Entgegenhaltungen:
**EP-A-0 053 944**
**EP-A-0 078 374**
**DE-A-3 213 928**
**DE-A-3 424 651**
**GB-A-2 149 186**
**US-A-3 544 979**
**US-A-3 639 699**
**US-A-4 277 809**

**PATENTS ABSTRACTS OF JAPAN, Band 4, Nr. 39 (P-4)(521), 28. März 1980, Seite 121P4; & JP - A - 55 12 522 (FUJITSU K.K.) 29.01.1980**
**IBM TECHNICAL DISCLOSURE BULLETIN; Band 12, Nr. 10, März 1970, Seite 1555, Armonk, N.Y., US; D.A. THOMPSON: "Multigap recording head"**
**PATENTS ABSTRACTS OF JAPAN, Band 2, Nr. 7, 18. Januar 1978, Seite 10163E77; & JP - A - 52 123 220**

(73) Patentinhaber: **Siemens Aktiengesellschaft Berlin und München, Wittelsbacherplatz 2, D-8000 München 2 (DE)**

(72) Erfinder: **Schewe, Herbert, Dr., Haydnstrasse 58, D-8522 Herzogenaurach (DE)**

(56) Entgegenhaltungen: (Fortsetzung)
**(TOKYO SHIBAURA DENKI K.K.) 17.10.1977**
**PATENTS ABSTRACTS OF JAPAN, Band 2, Nr. 45, Seite 528E78, 27 März 1978; & JP - A - 53 9110 (FUJITSU K.K.) 27.01.1978**
**PATENTS ABSTRACTS OF JAPAN, Band 4, Nr. 31 (P-2)(513), 18. märz 1980, Seite 108P2; & JP - A - 55 4723 (MATSUSHITA DENKI SANGYO K.K.) 14.01.1980**
**PATENTS ABSTRACTS OF JAPAN, Band 5, Nr. 9 (P-45)(681), 21. Januar 1981; & JP - A - 55 139 624 (TOKYO SHIBAURA DENKI K.K.) 31.10.1980**
**IBM TECHNICAL DISCLOSURE BULLETIN, Band 6, Nr. 6, Juli 1963, Seite 68, Armonk, N.Y., US; H.P. SCHLAEPPI: "High resolution magnetic recording head"**
**PATENTS ABSTRACTS OF JAPAN, Band 7, Nr. 109 (P-196)(1254), 12. Mai 1983; & JP - A - 58 32 214 (MATSUSHITA DENKI SANGYO K.K.) 25.02.1983**
**PATENTS ABSTRACTS OF JAPAN, Band 7, Nr. 188 (P-217)(1333), 17. August 1983; & JP - A - 58 88 812 (MATSUSHITA DENKI SANGYO K.K.) 27.05.1983**
**PATENTS ABSTRACTS OF JAPAN, Band 5, Nr. 38 (P-52)(710), 12. März 1981; & JP - A - 55 160 322 (HITACHI SEISAKUSHO K.K.)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf einen Dünnschicht-Magnetkopf mit schichtweisem Aufbau auf einem nichtmagnetischen Substrat für ein Aufzeichnungsmedium, das eine magnetisierbare Speicherschicht enthält, in welche längs einer Spur Informationen durch senkrechte (vertikale) Magnetisierung einzuschreiben sind. Der Magnetkopf weist einen den magnetischen Fluß führenden magnetischen Leitkörper mit zwei äußeren Magnetschenkeln und einem weiteren, mittleren Magnetschenkel auf, wobei die dem Aufzeichnungsmedium zugewandten Pole dieser Magnetschenkel in Bewegungsrichtung des Kopfes gesehen hintereinander und mit vorbestimmten Spaltweiten untereinander angeordnet sind. Ferner ist der Magnetkopf mit einer Schreib-/Lesespuleneinrichtung versehen, deren Stromleiter sich durch einen der zwischen dem mittleren Magnetschenkel und jeweils einem der dazu benachbarten äußeren Magnetschenkel ausgebildeten Zwischenräume erstrecken. Ein solcher Magnetkopf ist z. B. der EP-0 078 374 Al zu entnehmen.

Das Prinzip der senkrechten Magnetisierung zur Speicherung von Informationen in besonderen Aufzeichnungsmedien ist allgemein bekannt (vgl. z. B. "IEEE Transactions on Magnetics", vol. MAG-16, No. 1, Jan. 1980, Seiten 71 bis 76; DE-OS 29 24 013 bzw. US-PS 4 278 544; EP 0 012 910 Al; EP 0 012 912 Al). Die für dieses vielfach auch als vertikale Magnetisierung bezeichnete Prinzip vorzusehenden Aufzeichnungsmedien können in Form von starren Magnetspeicherplatten, flexiblen Einzelplatten (Floppy discs) oder Magnetbändern vorliegen. Ein entsprechendes Aufzeichnungsmedium weist mindestens eine magnetisierbare Speicherschicht vorbestimmter Dicke auf, welche ein magnetisch anisotropes Material, insbesondere aus einer CoCr-Legierung, enthält. Dabei ist die Achse der sogenannten leichten Magnetisierung dieser Schicht senkrecht zur Oberfläche des Mediums gerichtet. Mittels eines besonderen Magnetkopfes können dann längs einer Spur die einzelnen Informationen als Bits in aufeinanderfolgenden Abschnitten, auch Zellen oder Blöcke genannt, durch entsprechende Magnetisierung der Speicherschicht eingeschrieben werden. In der Praxis werden im allgemeinen die magnetischen Flußwechsel, d.h. die Übergänge von einer Magnetisierungseinrichtung zur entgegengesetzten, als Informationen benutzt. Die Bits haben dabei eine vorbestimmte, auch als Wellenlänge bezeichnete Ausdehnung in Längsrichtung der Spur. Diese Ausdehnung kann im Vergleich zu der Grenze, die bei einer Speicherung nach dem bekannten Prinzip einer longitudinalen (horizontalen) Magnetisierung durch die Entmagnetisierung gegeben ist, wesentlich kleiner sein. Somit läßt sich durch senkrechte Magnetisierung die Informationsdichte in den besonderen Aufzeichnungsmedien entsprechend vergrößern.

Die für das Prinzip der longitudinalen Magnetisierung bekannten kombinierten Schreib- und Lese-Magnetköpfe, d.h. Köpfe, mit denen sowohl die Schreib- als auch die Lesefunktion auszuüben ist, können jedoch nicht ohne weiteres für eine senkrechte Magnetisierung übernommen werden. Bei Verwendung dieser Köpfe, die im allgemeinen ringkopfähnliche Gestalt haben, läßt sich zwar die auch bei dem Prinzip der senkrechten Magnetisierung angestrebte Magnetflußführung zu einem möglichst geschlossenen Kreis mit geringem magnetischen Widerstand erreichen. Jedoch ist es schwierig, bei hohen Bit-Dichten und entsprechend kleiner Weite des zwischen den dem Aufzeichnungsmedium zugewandten Magnetpolen des Ringkopfes ausgebildeten sogenannten Luftspaltes ein ausreichend starkes Schreibfeld zu erzeugen.

Man sieht sich deshalb veranlaßt, für das Prinzip der senkrechten Magnetisierung spezielle Schreib-/Lese-Magnetköpfe zu entwickeln. Ein hierfür geeigneter Kopf weist im allgemeinen einen sogenannten Hauptpol auf, mit dem ein hinreichend starkes senkrechtes Magnetfeld zum Ummagnetisieren der einzelnen Abschnitte der Speicherschicht erzeugt wird. Der notwendige magnetische Rückschluß kann dann z. B. mittels eines sogenannten Hilfspoles vorgenommen werden, der sich bezüglich des Aufzeichnungsmediums beispielsweise auf derselben Seite wie der Hauptpol befindet (vgl. z. B. "IEEE Trans.Magn.", vol. MAG-17, no. 6, Nov. 1981, Seiten 3120 bis 3122 oder vol. MAG-18, no. 6, Nov. 1982, Seiten 1158 bis 1163; US-PS 4 287 544; EP-0 012 912 Al).

Bei den Magnetköpfen von diesem Kopftyp soll jeweils der Hilfspol in jedem Falle nur zur magnetischen Flußrückführung dienen. Ein eventuelles Mitschreiben dieses Poles kann gegebenenfalls zwar in Kauf genommen werden, da ihm der schreibende Hauptpol stets nacheilt und somit vom Hilfspol eventuell geschriebene Informationen überschreibt. Um jedoch ein Mitlesen des Hilfspoles mit seiner ablaufenden Kante zumindest weitgehend zu unterbinden, müßte der zwischen den beiden Polen ausgebildete Luftspalt verhältnismäßig breit sein, um so eine weitgehende Reduzierung der magnetischen Flußdichte am Hilfspol gewährleisten zu können. Entsprechend breite Spaltschichten lassen sich jedoch bei in Dünnschicht-Technik aufzubauenden Magnetköpfen nur schwer realisieren.

Diese Technik ist allgemein bekannt (vgl. z. B. "Feinwerktechnik und Meßtechnik", 88. Jahrgang, Heft 2, März 1980, Seiten 53 bis 59, oder "Siemens-Zeitschrift", Band 52, Heft 7, 1978, Seiten 434 bis 437). Nach dieser Technik soll auch der aus der eingangs genannten EP-0 078 374 Al zu entnehmenden Magnetkopf hergestellt werden.

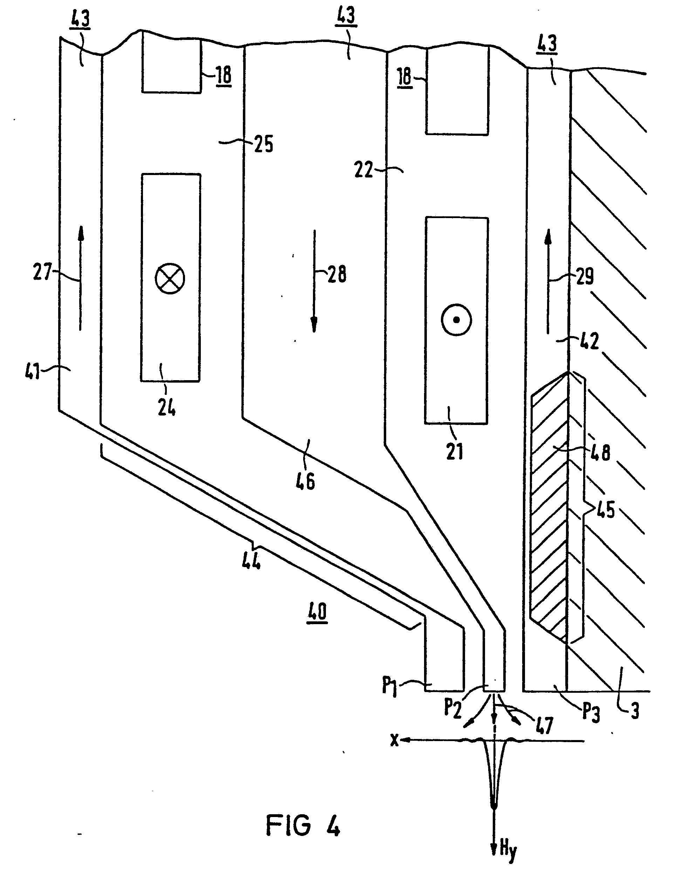

Aufgrund der sich im Hinblick auf ein Mitlesen des Hilfspoles ergebenden Schwierigkeiten weist der aus der EP-0 078 374 Al bekannte Magnetkopf nicht nur zwei, einen Haupt- bzw. Hilfspol bildende Magnetschenkel, sondern noch einen dritten, mittleren Magnetschenkel auf, der zwischen den beiden äußeren Magnetschenkeln angeordnet ist. Die dem Aufzeichnungsmedium zugewandten, jeweils einen Pol bildenden Enden dieser somit drei Magnetschenkel sind untereinander jeweils durch einen engen Luftspalt beabstandet, so daß dieser Magnetkopftyp auch als Doppelspalt-Magnetkopf bezeichnet wird. Durch nur einen der beiden zwischen dem mittleren Magnetschenkel und jeweils einem äußeren Magnetschenkel ausgebildeten Zwischenräume erstrecken sich die Stromleiter einer Schreib- und Lesespulenwicklung, während der andere Zwischenraum durch ein nicht-magnetisches Material ausgefüllt ist. Mit dieser Ausgestaltung des bekannten Magnetkopfes soll für die Schreibfunktion ein Magnetfeld zu erzeugen sein, das im Bereich des Poles des mittleren Magnetschenkels ein schmales, starkes Maximum vorbestimmter Polarität aufweist, während sich in den angrenzenden Bereichen der Pole der beiden äußeren Magnetschenkel jeweils ein wesentlich breiteres, jedoch nur schwaches Maximum mit entgegengesetzter Polarität anschließt (vgl. Figur 4 dieser EP-Al). Es hat sich jedoch gezeigt, daß dieser idealisierte symmetrische Feldverlauf bei diesem bekannten Magnetkopf kaum zu erreichen ist. Vielmehr ist das zwischen den Polen des einen äußeren Magnetschenkels und des mittleren Magnetschenkels ausgebildete Magnetfeld erheblich kleiner als das Magnetfeld der Pole des mittleren Magnetschenkels und des anderen äußeren Magnetschenkels. Hierdurch wird der Feldverlauf stark unsymmetrisch und unterscheidet sich nur geringfügig von dem Feldverlauf, wie er von bekannten Dünnschicht-Magnetköpfen mit ringkopfähnlicher Gestalt beispielsweise gemäß der EP-0 012 912 Al erzeugt wird und in Figur 3 der EP-0 078 374 Al wiedergegeben ist.

Aufgabe der vorliegenden Erfindung ist es deshalb, den bekannten Dünnschicht-Magnetkopf der eingangs genannten Art dahingehend zu verbessern, daß mit ihm der angestrebte symmetrische Feldverlauf des von seinen Magnetschenkeln hervorgerufenen Magnetfeldes zumindest weitgehend erreicht wird.

Diese Aufgabe wird durch die Merkmale im kennzeichnenden Teil des Anspruchs 1 gelöst.

Die mit der erfindungsgemäßen Ausbildung des Dünnschicht-Magnetkopfes verbundenen Vorteile sind insbesondere darin zu sehen, daß mit den sich durch die beiden Zwischenräume erstreckenden Stromleitern der Schreib-/Lesespuleneinrichtung für die Schreibfunktion Magnetfeldverhältnisse eingestellt werden können, die bezüglich einer durch den Pol des mittleren Magnetschenkels senkrecht zu dem Aufzeichnungsmedium verlaufenden Ebene zumindest annähernd symmetrisch sind, wobei im Bereich dieser Symmetrieebene ein ausgeprägtes Maximum ausgebildet ist. D.h., der Magnetkopf schreibt dann vorteilhaft quasi als ein sogenannter Einzelpol-Kopf die Informationen in das Aufzeichnungsmedium. Für die Lesefunktion kann wegen der guten magnetischen Flußführung der hohe Wirkungsgrad eines Ringkopfes erreicht werden. Dabei wird vorteilhaft die Vertikalkomponente der Magnetisierung stark bevorzugt und damit das Lesesignal entsprechend angehoben.

Besonders vorteilhaft ist es, wenn der mittlere Magnetschenkel zumindest im Bereich seines Poles aus einem Material besteht, dessen Sättigungsmagnetisierung einen höheren Wert hat als vergleichsweise das oder die Materialien der äußeren Magnetschenkel zumindest im Bereich deren Pole, so daß die äußeren Magnetschenkel im Bereich ihrer Pole bei der Schreibfunktion aufgrund eines in der Spuleneinrichtung fließenden Schreibstromes eher in die magnetische Sättigung zumindest annähernd getrieben sind als der mittlere Magnetschenkel. Dann kann nämlich vermieden werden, daß bereits bei verhältnismäßig kleinen Schreibströmen der mittlere Schenkel in die Sättigung gefahren wird und damit das maximal erreichbare vertikale Magnetfeld entsprechend reduziert wird.

Weitere vorteilhafte Ausgestaltungen des Dünnschicht-Magnetkopfes nach der Erfindung gehen aus den übrigen Unteransprüchen hervor.

Zur weiteren Erläuterung der Erfindung und deren in den Unteransprüchen gekennzeichneten Weiterbildungen wird nachfolgend auf die Zeichnung Bezug genommen, in deren Figur 1 schematisch ein Ausführungsbeispiel eines erfindungsgemäßen Doppelspalt-Magnetkopfes als Längsschnitt veranschaulicht ist, von dem in Figur 2 ein Ausschnitt wiedergegeben ist. Die Figuren 3 bis 5 zeigen weitere Ausführungsformen von Magnetköpfen nach der Erfindung in entsprechender Darstellung. Dabei sind in den Figuren übereinstimmende Teile mit den gleichen Bezugszeichen versehen.

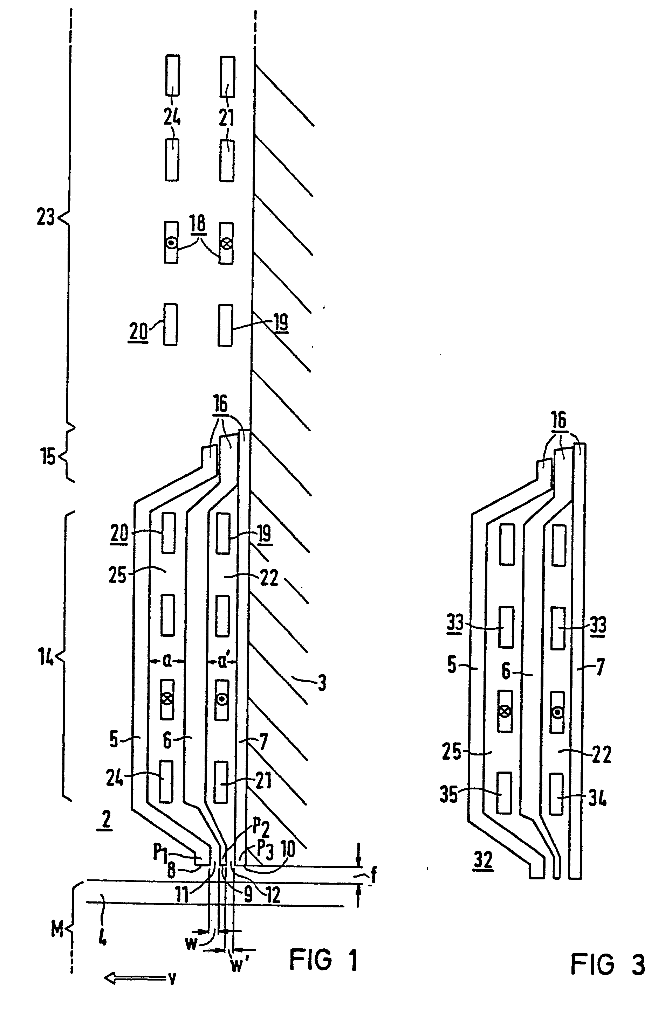

Bei dem in Figur 1 gezeigten Dünnschicht-Magnetkopf nach der Erfindung wird von an sich bekannten dreischenkligen Ausführungsformen für das Prinzip der senkrechten (vertikalen) Magnetisierung ausgegangen (vgl. z. B. die genannte EP-0 078 374 Al). Der in der Figur allgemein mit 2 bezeichnete Kopf, der z. B. während seiner Schreibfunktion gezeigt sein soll, befindet sich auf einer Flachseite eines Substrates 3, das z. B. die Stirnseite oder die Rückseite eines gebräuchlichen, auch als Flugkörper bezeichneten Elementes bildet und in der Figur nur als Teil angedeutet ist. Dieser Kopf ist relativ zu einem an sich bekannten, vertikal zu magnetisierenden Aufzeichnungsmedium M in geringer Flughöhe f von beispielsweise 0,2 μm über einer Speicherschicht 4 dieses Mediums längs einer Spur zu führen. Die Speicherschicht besteht z. B. aus einer COCr-Legierung, die sich gegebenenfalls auf einer weichmagnetischen Unterlage, z. B. aus NiFe, befindet. In der Figur ist die relative Bewegungsrichtung des Aufzeichnungsmediums M bezüglich des Magnetkopfes $\underline{2}$ durch eine mit v bezeichnete gepfeilte Linie angedeutet.

Der Magnetkopf $\underline{2}$ weist drei Magnetschenkel 5 bis 7 auf, die weitgehend und insbesondere an ihren dem Aufzeichnungsmedium M zugewandten Enden 8 bis 10 zumindest annähernd senkrecht zur Oberfläche des Aufzeichnungsmediums M ausgerichtet sind und dort jeweils einen Magnetpol $P_1$, $P_2$ bzw. $P_3$ bilden. Zwischen diesen drei Schenkelenden sind zwei Luftspalte 11 und 12 mit vorteilhaft geringen longitudinalen, d.h. in Bewegungsrichtung v weisenden Weiten w bzw. w' von unter 1 μm, insbesondere unter 0,3 μm ausgebildet. Beispielsweise sind die Weiten w und w' dieses Doppelspaltes etwa gleich groß. In einem mittleren Bereich 14 des Magnetkopfes $\underline{2}$ sind die Abstände zwischen den einzelnen Magnetschenkeln 5 bis 7 gegenüber den entsprechenden Spaltweiten w und w' erweitert, indem z. B. der hinsichtlich der Bewegungsrichtung rückwärtige äußere Magnetschenkel 5 in diesem Bereich auf einen größeren Abstand a bezüglich des mittleren Magnetschenkels 6 führt. In entsprechender Weise ist in diesem Bereich 14 zwischen dem mittleren Magnetschenkel 6 und dem inneren, eben auf dem Substrat 3 liegenden Magnetschenkel 7 ein abstand a' ausgebildet. Außerhalb dieses Bereiches sind auf der dem Aufzeichnungsmedium M abgewandten Seite die drei Magnetschenkel 5 bis 7 in bekannter Weise in einem Verbindungsbereich 15 wieder zusammengeführt. Der äußere und der innere Magnetschenkel 5 bzw. 7 bilden somit einen den magnetischen Fluß führenden Leitkörper $\underline{16}$ mit ringkopfähnlicher Gestalt, der darüber hinaus mit einem mittleren, von diesen Schenkeln 5 und 7 umgebenen Magnetschenkel 6 ausgestattet ist.

Für die Schreib- und Lesefunktion ist der Magnetkopf $\underline{2}$ mit einer Spuleneinrichtung $\underline{18}$ versehen, die gemäß dem Ausführungsbeispiel nach Figur 1 aus zwei ein- oder mehrlagigen, flachen Spulenwicklungen $\underline{19}$ und $\underline{20}$ gebildet wird. Diese beispielsweise in bekannter Planartechnik zu erstellenden Spulenwicklungen sind untereinander zumindest weitgehend parallel angeordnet. Dabei erstrecken sich die Stromleiter 21 der dem Substrat 3 zugewandten planaren Spulenwicklung $\underline{19}$ nicht nur durch einen zwischen dem inneren Magnetschenkel 7 und dem mittleren Magnetschenkel 6 im Bereich 14 ausgebildeten Zwischenraum 22, sondern verlaufen auch in einem Bereich 23, der sich an die Bereiche 14 und 15 auf der dem Aufzeichnungsmedium M abgewandten Seite des magnetischen Leitkörpers $\underline{16}$ anschließt. In entsprechender Weise sind auch die Stromleiter 24 der weiteren Spulenwicklung $\underline{20}$ durch einen Zwischenraum 25 zwischen dem mittleren Magnetschenkel 6 und dem äußeren Magnetschenkel 5 hindurchgeführt. Wie ferner in der Figur durch Symbole für die Stromflußrichtungen angedeutet ist, sollen gemäß der Erfindung die Stromflußrichtungen in den Stromleitern 21 und 24 der beiden Spulenwicklungen $\underline{19}$ und $\underline{20}$ antiparallel verlaufen. Hierzu sind die beiden Spulenwicklungen in Serie geschaltet. Auf diese Weise läßt sich im Bereich des Poles $P_2$ des mittleren Magnetschenkels 6 für die Schreibfunktion ein Magnetfeld erzeugen, das dort ein ausgeprägtes Maximum aufweist, wie es für die sogenannten Einzelpol-Köpfe typisch ist.

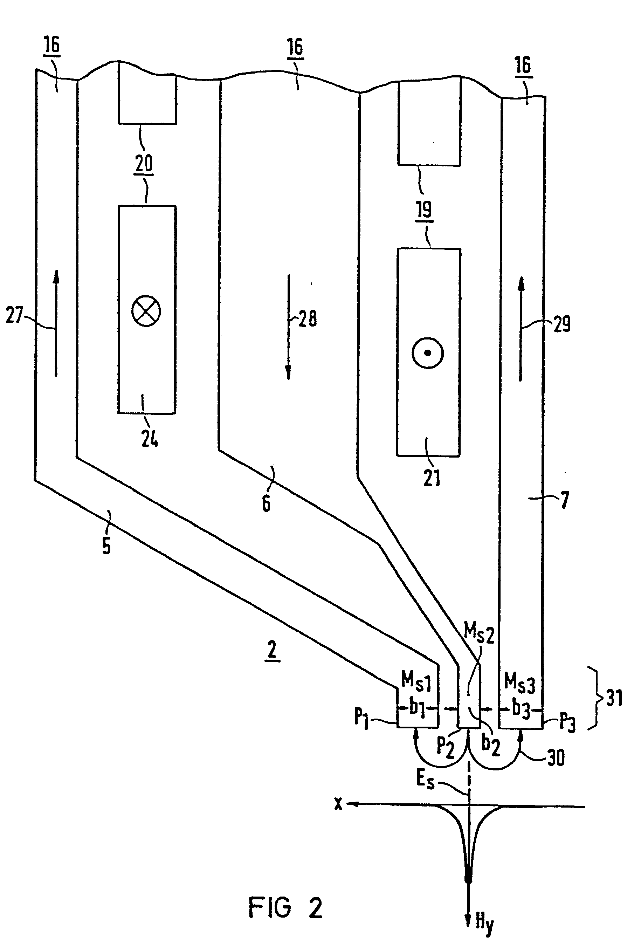

Diese Feldverhältnisse sind in Figur 2 näher veranschaulicht, in der das dem Aufzeichnungsmedium zugewandte Ende des Magnetkopfes $\underline{2}$ nach Figur 1 vergrößert wiedergegeben ist. In dieser Figur 2 sind durch gepfeilte Linien 27 bis 29 die Magnetisierungen in den einzelnen Schenkeln 5 bis 7 veranschaulicht, die sich aufgrund der gewählten Stromflußrichtungen in den Stromleitern 21 und 24 der beiden Spulenwicklungen $\underline{19}$ und $\underline{20}$ ergeben. Die damit verbundenen, an den Magnetpolen $P_1$ bis $P_3$ austretenden Feldlinien sind durch mit 30 bezeichnete Linien angedeutet. Die Figur 2 zeigt ferner in einem Diagramm das mit dem Magnetkopf zu erzeugende, in y-Richtung weisende, senkrehte magnetische Grundfeld $H_y$ in Abhängigkeit von der auf einer x-Achse eingetragenen Position in der relativen Bewegungsrichtung des Magnetkopfes. Wie aus dieser Figur darüber hinaus ohne weiteres ersichtlich ist, läßt sich die Breite der Kurve $H_y$, die zu einer durch den Pol $P_2$ verlaufenden, senkrecht auf dem Aufzeichnungsmedium stehenden und somit in y-Richtung weisenden Ebene $E_s$ zumindest weitgehend symmetrisch ist, durch eine entsprechende Wahl der Ausdehnung der einzelnen Pole $P_1$ bis $P_3$ in Bewegungsrichtung beeinflußen. Da möglichst scharfe, d.h. schmale Maxima der Kurven erwünscht sind, die zu entsprechend deutlichen Schreibsignalen führen, wählt man bei einer speziellen Ausführungsform des Kopfes vorteilhaft die longitudinale Breite $b_2$ des Poles $P_2$ wesentlich kleiner, vorzugsweise höchstens halb so groß wie jede der entsprechenden Breiten $b_1$ bzw. $b_3$ der benachbarten Pole $P_1$ bzw. $P_3$ entgegengesetzter Polarität. Dabei sind aus Symmetriegründen im allgemeinen die Breiten $b_1$ und $b_3$ etwa gleich groß zu wählen.

Besonders vorteilhaft ist es außerdem, wenn der magnetische Leitkörper $\underline{16}$ des Magnetkopfes $\underline{2}$ aus mindestens zwei verschiedenen magnetischen Materialien aufgebaut wird, die eine möglichst hohe relative Permeabilität $\mu_r$, z. B. von mindestens 1500, vorzugsweise von mindestens 2000, aufweisen und außerdem unterschiedliche Sättigungsmagnetisierungen $M_{s1}$ bis $M_{s3}$ besitzen. Dabei soll die Sättigungsmagnetisierung $M_{s2}$ des mittleren Magnetschenkels 6 einen mindetens um 20 %, vorzugsweise um mindestens 30 % höheren Wert

als die Sättigungsmagnetisierungen $M_{s1}$ und $M_{s3}$ der beiden anderen Magnetschenkel 5 bzw. 7 haben. Da die beiden äußeren Magnetschenkel 5 und 7 im allgemeinen aus dem gleichen Material aufgebaut werden, sind dann $M_{s1}$ und $M_{s3}$ gleich. Dementsprechend besteht der mittlere Magnetschenkel 6 beispielsweise aus einer CoZr-Legierung mit einer Sättigungsmagnetisierung $M_{s2}$ von etwa 11,2 kA/cm. Die beiden äußeren Magnetschenkel 5 und 7 können dagegen z. B. aus einer speziellen Permalloy-Legierung (nickelreichen NiFe-Legierung) mit einer Sättigungsmagnetisierung $M_{s1}$ bzw. $M_{s3}$ von etwa 8 kA/cm hergestellt sein. Für die Schreibfunktion wird dann der mittlere Magnetschenkel 6 von den beiden entgegengesetzt geschalteten Spulenwicklungen 19 und 20 erregt, wobei jeder der beiden äußeren Magnetschenkel 5, 7 nur etwa die Hälfte des Magnetflusses des inneren Magnetschenkels 6 aufnimmt. Da wegen der größeren Sättigungsmagnetisierung des CoZr-Materials des mittleren Schenkels 6 eine um etwa 40 % höhere Flußdichte erzielt werden kann als in dem NiFe-Material der äußeren Magnetschenkel 5 und 7, wird damit vorteilhaft die Schreibfeldstärke entsprechend gesteigert.

Darüber hinaus können noch bei dieser besonderen Ausführungsform des Magnetkopfes aus verschiedenen magnetischen Materialien die äußeren Magnetschenkel 5 und 7 in ihren den Magnetfluß tragenden Querschnittsflächen bzw. ihren entsprechenden longitudinalen Breiten $b_1$ bzw. $b_3$ in dem mit 31 bezeichneten Bereich ihrer Pole $P_1$ bzw. $P_3$ soweit reduziert werden, daß sie bereits gesättigt sind, bevor der mittlere Magnetschenkel 6 in die Sättigung geht. Auf diese Weise läßt sich vorteilhaft das vertikale Schreibfeld noch zusätzlich verstärken.

Bei dem besonderen Magnetkopf 2 nach den Figuren 1 und 2 mit Materialien unterschiedlicher Sättigungsmagnetisierung ist angenommen, daß die drei Magnetschenkel 5 bis 7 über ihre gesamte vertikale Länge jeweils aus mindestens einer Schicht aus einem Material vorbestimmter Sättigungsmagnetisierung $M_{s1}$ bzw. $M_{s2}$ bzw. $M_{s3}$ bestehen. Gegebenenfalls lassen sich jedoch die für den Schreibvorgang angestrebten Magnetisierungsverhältnisse auch erreichen, wenn man die vorbestimmten Materialien nur für Teile der Magnetschenkel wie insbesondere für den Bereich 31 der einzelnen Pole vorsieht. Außerdem können für die beiden äußeren Magnetschenkel 5 und 7 auch Materialien mit unterschiedlichen Sättigungsmagnetisierungen $M_{s1}$ und $M_{s3}$ gewählt werden.

Ein weiterer, in Figur 3 gezeigter und allgemein mit 32 bezeichneter Dünnschicht-Magntkopf nach der Erfindung unterscheidet sich von dem Magnetkopf 2 gemäß Figur 1 im wesentlichen nur dadurch, daß seine Magnetspuleneinrichtung nicht aus zwei planaren Spulenwicklungen gebildet wird, sondern daß nur eine einzige Spulenwicklung 33 in an sich bekannter Stapeltechnik um den mittleren Magnetschenkel 6 des Leiterkörpers 16 des Magnetkopfes gewickelt ist. Gemäß dieser Technik werden zwischen den Magnetschenkel 5 und 6 bzw. 6 und 7 in den entsprechenden Zwischenräumen 22 bzw. 25 zunächst die dort anzuordnenden Stromleiterteile 34 bzw. 35 der Spulenwicklung in Dünnschichttechnik ausgebildet und strukturiert und hernach untereinander zu der einzigen Spulenwicklung 33 verbunden. Die durch Stromflußrichtungssymbole veranschaulichten Stromflußrichtungen in den Stromleiterteilen 34 und 35 zu beiden Seiten des mittleren Magnetschenkels 6 sind somit zwangsläufig antiparallel.

Von einer weiteren Ausführungsform eines Dünnschicht-Magnetkopfes nach der Erfindung ist in Figur 4 entsprechend der Darstellung nach Figur 2 nur das einem Aufzeichnungsmedium zugewandte Endstück wiedergegeben. Dieser allgemein mit 40 bezeichnete Magnetkopf unterscheidet sich von dem Magnetkopf 2 gemäß den Figuren 1 und 2 im wesentlichen nur durch eine besondere Ausgestaltung des äußeren Magnetschenkels 41 und des inneren Magnetschenkels 42 seines den Magnetfluß führenden Leitkörpers 43. Seine Magnetschenkel 41 und 42 sind nämlich jeweils zumindest in einem Teilabschnitt 44 bzw. 45 bei einem vorhandenen, durch die eingezeichneten Stromflußrichtungssymbole veranschaulichten, verhältnismäßig großen Schreibstrom in die magnetische Sättigung zu treiben. Hierzu weist der äußere Magnetschenkel 41 einen entsprechend geringen Querschnitt seines den magnetischen Fluß führenden Materials in dem Teilabschnitt 44 auf, so daß er dann wie eine magnetische Sperre für den magnetischen Fluß wirkt, welcher von den zu beiden Seiten des mittleren Magnetschenkels 46 liegenden Stromleitern 21 und 24 oder 34 und 35 einer Magnetspuleneinrichtung 16 bzw. 33 erzeugt wird. In entsprechender Weise ist auch für den inneren Magnetschenkel 42 in einem Teilabschnitt 45 ein geringer Querschnitt seines den magnetischen Fluß führenden Materials vorgesehen. An den Polenden $F_1$ und $F_3$ dieser beiden Magnetschenkel 41 und 42 ist dann folglich höchstens nur noch ein minimaler Magnetfluß vorhanden, so daß praktisch nur mit dem magnetischen Fluß an dem Pol $P_2$ des mittleren Magnetschenkels 46 die Schreibfunktion ausgeübt wird. Die an dem Pol $P_2$ austretenden Feldlinien sind in der Figur mit 47 bezeichnet. Der erfindungsgemäße Magnetkopf 40 schreibt also vorteilhaft quasi wie ein Einzelpol-Kopf. Das von ihm erzeugte senkrechte magnetische Grundfeld $H_y$, das in der Figur diagrammartig in Abhängigkeit von der auf einer x-Achse eingetragenen Position in Bewegungsrichtung des Kopfes wiedergegeben ist, hat dann ein ausgeprägtes, sehr schmales Maximum, mit dem entsprechend deutliche Schreibsignale zu erzeugen sind.

Gemäß dem in Figur 4 gezeigten Ausführungsbeispiel des Magnetkopfes 40 wurde davon ausgegangen, daß der Teilabschnitt 45 des inneren Magnetschenkels 42 mit vermindertem Querschnitt dadurch gegeben ist, daß in diesem Schenkel eine entsprechende Aussparung 48 aus nicht-magnetischem Material von der dem Substrat 3 zugewandten Seite her vorgesehen wird. Diese Aussparung läßt sich z. B. durch eine entsprechende Strukturierung des Substrates 3 ausbilden. Selbstverständlich kann eine entsprechende Aussparung auch von der gegenüberliegenden Seite her, d.h. von der Seite des zwischen dem inneren Magnetschenkel 42 und dem mittleren Magnetschenkel 46 ausgebildeten Zwischenraumes 22 her vorgesehen werden. Darüber hinaus brauchen auch die querschnittsverminderten Teilabschnitte 44 und 45 der beiden Magnetschenkel 41 und 42 nicht nur die in Figur 4 angenommene verhältnismäßig kurze Ausdehnung in Flußführungsrichtung haben, sondern diese Teilabschnitte können sich jeweils auf den größten Teil des entsprechenden Magnetschenkels erstrecken.

Außerdem ist bei Ausführungsformen eines Doppelspalt-Magnetkopfes mit querschnittsverminderten Teilabschnitten, die durch einen Schreibstrom in die magnetische Sättigung zu treiben sind, die in Figur 4 veranschaulichte größte Ausdehnung der Pole $P_1$ und $P_3$ in Bewegungsrichtung gegenüber dem mittleren Pol $P_2$ nicht unbedingt erforderlich. So können beispielsweise auch diese Pole in die querschnittsverminderten Teilabschnitte mit einbezogen sein, so daß ihre longitudinale Ausdehnung dann jeweils kleiner als die des mittleren Poles $P_2$ ist.

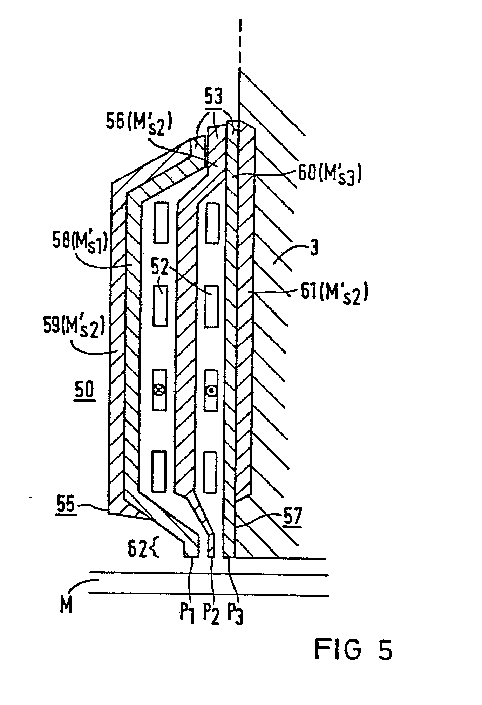

Bei einem weiteren, in Figur 5 gezeigten Ausführungsbeispiel eines erfindungsgemäßen Magnetkopfes ist eine in Stapeltechnik zu erstellende Schreib-/Lesespuleneinrichtung wie bei dem Magnetkopf 32 nach Figur 3 zugrundegelegt. Dementsprechend ist bei diesem mit 50 bezeichneten Magnetkopf, bei dessen Aufbau von dem Magnetkopf 32 gemäß Figur 3 ausgegangen wird, die einzige Spulenwicklung 52 um den mittleren Magnetschenkel 56 seines magnetischen Leitkörpers 53 gewickelt. Außerdem unterscheidet sich dieser Magnetkopf 50 von den Magnetköpfen 2 und 32 gemäß den Figuren 1 und 3 noch dadurch, daß seine beiden äußeren Magnetschenkel 55 und 57 jeweils aus mindestens zwei Magnetschichten 58, 59 bzw. 60, 61 mit unterschiedlichen Werten $M_s$ ihrer Sättigungsmagnetisierungen bestehen. Dabei haben die bis an die Polenden $P_1$ bzw. $P_3$ reichenden Schichten 58 bzw. 60 der äußeren Schenkel 55 bzw. 57 einen niedrigeren $M_s$-Wert. Diese mit $M'_{s1}$ bzw. $M'_{s3}$ bezeichneten Werte können z. B. den Werten $M_{s1}$ bzw. $M_{s3}$ gemäß dem speziellen Ausführungsbeispiel nach der Figur entsprechen und gegebenenfalls auch gleich sein. Als Material für diese Schichten kann somit die genannte NiFe-Legierung gewählt werden. Hingegen bestehen die sich nicht bis in den mit 62 bezeichneten Bereich der jeweiligen Polenden erstreckenden zusätzlichen Magnetschichten 59 und 61 der beiden äußeren Magnetschenkel 55 bzw. 57 aus einem Material mit höherem Wert $M'_{s2}$ der Sättigungsmagnetisierung. So kann z. B. für diese zusätzlichen Schichten die genannte CoZr-Legierung mit dem Wert $M_{s2}$ entsprechend Figur 2 gewählt werden. Der mittlere Magnetschenkel 56 besteht beispielsweise auch aus diesem Material mit der Sättigungsmagnetisierung $M'_{s2}$. Mit dieser Ausbildung läßt sich erreichen, daß für die Schreibfunktion mit hohen Strömen die beiden äußeren Pole $P_1$ und $P_3$ aus der genannten NiFe-Legierung schnell gesättigt werden und der Magnetkopf 50 somit als Einzelpol-Kopf arbeitet. Die nicht-gesättigten äußeren CoZr-Schichten 59 und 61 verbessern dabei die Magnetflußführung und damit die Schreibempfindlichkeit. Diese gewünschte Funktion ist auch dann gegeben, falls nicht, wie gemäß Figur 5, die Schichten 59 und 61 mit der höheren Sättigungsmagnetisierung $M'_{s2}$ auf der jeweiligen Außenseite der Schichten 58 bzw. 60 mit der kleineren Sättigungsmagnetisierung $M'_{s1}$ bzw. $M'_{s3}$, sondern auf deren Innenseiten angeordnet werden.

Neben dem erwähnten CoZr-Material für die Schichten mit hoher Sättigungsmagnetisierung gemäß den Ausführungsformen nach den Figuren 2 und 5 können auch andere Materialien wie z. B. FeB oder FeSiRu vorgesehen werden.

Die Herstellung der erfindungsgemäßen Magnetköpfe wird vorteilhaft in an sich bekannter Dünnschicht- bzw. Dünnfilm-Technik vorgenommen. Die hierbei verwendeten Substrate bestehen z. B. aus TiC und $Al_2O_3$. Zum Aufbau der Magnetschenkel werden dünne Magnetschichten aus speziellen NiFe-Legierungen wie Permalloy (Ni/Fe-81/19) oder aus weichmagnetischen amorphen Materialien, z. B. aus FeB, durch Sputtern, Aufdampfen oder galvanische Abscheidung aufgebracht und jeweils durch eine nichtmagnetische Zwischenlage voneinander getrennt. Die leichte Richtung der Magnetisierung kann z. B. beim Aufbringen der jeweiligen Schicht durch ein angelegtes Magnetfeld induziert werden. Sie liegt im allgemeinen immer senkrecht zur Richtung des magnetischen Flusses in dem magnetischen Leitkörper, d.h. im Bereich der Magnetpole $P_1$ bis $P_3$ im wesentlichen parallel zur Oberfläche des Aufzeichnungsmediums M. Die aufgewachsenen unterschiedlichen Schichten werden durch an sich bekannte Techniken wie Fotolithographie, Plasma-, Ionenstrahl- oder naßchemisches Ätzen strukturiert, um so die Magnetschenkel des Kopfes auszubilden. Zur Herstellung der für die Schreib- und Lesefunktion vorgesehenen Magnetspuleneinrichtung wird eine einige μm dicke Schicht aus Cu oder Al oder Au abgeschieden und entsprechend strukturiert. Die einzelnen für den Aufbau der Magnetköpfe erforderlichen Isolationsschichten sind in den Figuren aus Gründen der Übersichtlichkeit der Darstellung weggelassen.

**Patentansprüche**

1. Dünnschicht-Magnetkopf (2, 32, 40, 50) mit schichtweisem Aufbau auf einem nichtmagnetischen Substrat (3) für ein Aufzeichnungsmedium (M), das eine magnetisierbare Speicherschicht (4) enthält, in welche längs einer Spur Informationen durch senkrechte (vertikale) Magnetisierung einzuschreiben sind, welcher Magnetkopf
- einen den magnetischen Fluß führenden magnetischen Leitkörper (16, 43, 53) mit zwei äußeren Magnetschenkeln (5, 7; 41, 42; 55, 57) und einem weiteren, mittleren Magnetschenkel (6, 46, 56) aufweist, wobei die dem Aufzeichnungsmedium zugewandten Pole (P$_1$, P$_2$, P$_3$) dieser Magnetschenkel in Bewegungsrichtung (v) des Kopfes gesehen hintereinander und mit vorbestimmten Spaltweiten (w, w') untereinander angeordnet sind,
- und mit einer Schreib-/Lesespuleneinrichtung (18, 33, 52) versehen ist, deren Stromleiter (21, 24; 34, 35) sich durch einen der zwischen dem mittleren Magnetschenkel und jeweils einem der dazu benachbarten äußeren Magnetschenkel ausgebildeten Zwischenräume (22, 25) erstrecken, dadurch gekennzeichnet, daß die Spuleneinrichtung (18, 33, 52) auch Stromleiter (21, 24; 34, 35) umfaßt, die durch den weiteren Zwischenraum (22 oder 25) verlaufen, und daß der mittlere Magnetschenkel (6; 46; 56) im wesentlichen allein der schreibende Magnetschenkel ist, indem die Stromleiter (21, 24; 34, 35) lediglich an dem mittleren Magnetschenkel zu beiden Seiten angeordnet sind und in ihnen für die Schreibfunktion Stromflußrichtungen so eingestellt sind, daß gemeinsam von ihnen der mittlere Magnetschenkel in jeweils gleicher Richtung magnetisiert ist.

2. Magnetkopf nach Anspruch 1, dadurch gekennzeichnet, daß der mittlere Magnetschenkel (6, 56) zumindest im Bereich (31, 62) seines Poles (P$_2$) aus einem Material besteht, dessen Sättigungsmagnetisierung (M$_{s2}$, M'$_{s2}$) einen höheren Wert hat als vergleichsweise das oder die Materialien der äußeren Magnetschenkel (5, 7; 55, 57) zumindest im Bereich (31, 62) deren Pole (P$_1$, P$_3$) so daß die äußeren Magnetschenkel (5, 7; 55, 57) im Bereich (31, 62) ihrer Pole (P$_1$, P$_3$) bei der Schreibfunktion aufgrund eines in der Spuleneinrichtung (18, 52) fließenden Schreibstromes eher in die magnetische Sättigung zumindest annähernd getrieben sind als der mittlere Magnetschenkel (6, 56).

3. Magnetkopf nach Anspruch 2, dadurch gekennzeichnet, daß die Sättigungsmagnetisierung (M$_{s2}$, M'$_{s2}$) des mittleren Magnetschenkels (6, 56) zumindest im Bereich (31, 62) dessen Poles (P$_2$) mindestens 20 %, vorzugsweise mindestens 30 % größer ist als vergleichweise die Sättigungsmagnetisierungen (M$_{s1}$, M'$_{s1}$, M$_{s3}$, M'$_{s3}$) der äußeren Magnetschenkel (5, 7; 55, 57) zumindest im Bereich (31, 62) deren Pole (P$_1$ bzw. P$_3$).

4. Magnetkopf nach Anspruch 2 oder 3, dadurch gekennzeichnet, daß mindestens einer der beiden äußeren Magnetschenkel (55, 57) außer einer ersten magnetischen Schicht (58 bzw. 60) mit der vergleichsweise niedrigeren Sättigungsmagnetisierung (M'$_{s1}$ bzw. M'$_{s3}$) außerhalb des Bereiches (62) seines Poles (P$_1$ bzw. P$_3$) mindestens eine weitere magnetische Schicht (59 bzw. 61) aufweist, deren Sättigungsmagnetisierung (M'$_{s2}$) größer als die niedrigere Sättigungsmagnetisierung (M'$_{s1}$ bzw. M'$_{s3}$) der ersten magnetischen Schicht (58 bzw. 60) dieses Schenkels (55, 57) ist.

5. Magnetkopf nach Anspruch 4, dadurch gekennzeichnet, daß die weitere magnetische Schicht (59, 61) eine Sättigungsmagnetisierung (M'$_{s2}$) aufweist, die mindestens 20 %, vorzugsweise mindestens 30 % größer als die Sättigungsmagnetisierung (M'$_{s1}$, M'$_{s3}$) der ersten magnetischen Schicht (58, 60) ist.

6. Magnetkopf nach einem der Ansprüche 2 bis 5, dadurch gekennzeichnet, daß für die Teile des magnetischen Leitkörpers (16, 53) aus dem Material mit der vergleichsweise niedrigeren Sättigungsmagnetisierung (M$_{s1}$, M$_{s3}$, M'$_{s1}$, M'$_{s3}$) ein Material mit einer Sättigungsmagnetisierung von weniger als 8 kA/cm, vorzugsweise unter 5 kA/cm, vorgesehen ist.

7. Magnetkopf nach einem der Ansprüche 2 bis 6, dadurch gekennzeichnet, daß für die Teile des magnetischen Leitkörpers (16, 53) aus dem Material mit der vergleichsweise höheren Sättigungsmagnetisierung (M$_{s2}$, M'$_{s2}$) ein Material mit einer Sättigungsmagnetisierung von mindestens 10 kA/cm, vorzugsweise mehr als 11 kA/cm, vorgesehen ist.

8. Magnetkopf nach einem der Ansprüche 1 bis 7, dadurch gekennzeichnet, daß sein magnetischer Leitkörper (16, 43, 53) zumindest teilweise aus weichmagnetischem Material besteht.

9. Magnetkopf nach einem der Ansprüche 1 bis 8, dadurch gekennzeichnet, daß sein magnetischer Leitkörper (16, 43, 53) aus einem Material besteht, dessen leichte Magnetisierung zumindest weitgehend senkrecht zur Führungsrichtung des magnetischen Flusses gerichtet ist.

10. Magnetkopf nach einem der Ansprüche 1 bis 9, dadurch gekennzeichnet, daß sein magnetischer Leitkörper (16, 43, 53) aus einem Material besteht, dessen relative Permeabilität ($\mu_r$) mindestens 1500, vorzugsweise mindestens 2000 beträgt.

11. Magnetkopf nach einem der Ansprüche 2 bis 10, dadurch gekennzeichnet, daß das Material mit der niedrigeren Sättigungsmagnetisierung (M$_{s1}$, M$_{s3}$, M'$_{s1}$, M'$_{s3}$) eine Permalloy-Legierung ist.

12. Magnetkopf nach einem der Ansprüche 2 bis 11, dadurch gekennzeichnet, daß das Material mit der höheren Sättigungsmagnetisierung (M$_{s2}$,

M'$_{s2}$,) eine CoZr-Legierung oder ein FeB-Legierung oder eine FeSiRu-Legierung ist.

13. Magnetkopf nach einem der Ansprüche 1 bis 12, dadurch gekennzeichnet, daß die beiden dem mittleren Magnetschenkel (46) benachbarten Magnetschenkel (41, 42) jeweils in einem Teilabschnitt (44 bzw. 45) einen vorbestimmten geringen Querschnitt aufweisen, so daß diese Teilabschnitte (44, 45) während der Schreibfunktion mittels des Schreibstromes der Magnetspuleneinrichtung (18) zumindest weitgehend in die magnetische Sättigung getrieben sind (Fig. 4).

14. Magnetkopf nach Anspruch 13, dadurch gekennzeichnet, daß die Teilabschnitte mit vorbestimmtem geringen Querschnitt der beiden dem mittleren Magnetschenkel benachbarten Magnetschenkel die Magnetpole dieser Magnetschenkel mit umfassen.

15. Magnetkopf nach einem der Ansprüche 1 bis 14, dadurch gekennzeichnet, daß die Magnetpole (P$_1$, P$_3$) der beiden dem mittleren Magnetschenkel (6) benachbarten Magnetschenkel (5, 7) in Bewegungsrichtung (v) des Magnetkopfes (2; 32) wesentlich weiter ausgedehnt sind als der Magnetpol (P$_2$) des mittleren Magnetschenkels (6).

16. Magnetkopf nach einem der Ansprüche 1 bis 15, dadurch gekennzeichnet, daß die Spuleneinrichtung (18) aus zwei zumindest weitgehend planaren Spulenwicklungen (19, 20) gebildet ist.

17. Magnetkopf nach einem der Ansprüche 1 bis 15, dadurch gekennzeichnet, daß die Spuleneinrichtung (33; 52) aus einer um den mittleren Magnetschenkel (6; 56) angeordneten Spulenwicklung besteht.

**Claims**

1. Thin-layer magnetic head (2, 32, 40, 50) with a layered construction on a non-magnetic substrate (3) for a recording medium (M), containing a magnetizable storage layer (4) into which pieces of information are to be entered along one track by perpendicular (vertical) magnetization, wherein the magnetic head
- has a magnetic conductive body (16, 43, 53) which conducts the magnetic flux and has two outer magnetic legs (5, 7; 41, 42; 55, 57) and an additional central magnetic leg (6, 46, 56), wherein the poles (P$_1$, P$_2$, P$_3$), facing the recording medium, of these magnetic legs are seen to be behind each other in the moving direction (v) of the head and are arranged with predetermined gaps (w, w') between them,
- and is provided with a writing/reading coil arrangement (18, 33, 52), whose current leads (21, 24; 34, 35) extend through one of the spaces (22, 25) formed between the central magnetic leg and a respective one of the outer magnetic legs adjacent to it, characterised in that the coil arrangement (18, 33, 52) also comprises current leads (21, 24; 34, 35) which run through the additional space (22 or 25), and in that the central magnetic leg (6; 46; 56) is substantially only the writing magnetic leg, the current leads (21, 24; 34, 35) being arranged only at the central magnetic leg to both sides and conduction directions in them for the writing function being controlled in such a way that the central magnetic leg is commonly magnetised by them in the same respective direction.

2. Magnetic head according to claim 1, characterised in that the central magnetic leg (6, 56) comprises at least in the region (31, 62) of its pole (P$_2$) a material whose saturation magnetization (M$_{s2}$, M'$_{s2}$) has a comparatively higher value than the material or materials of the outer magnetic legs (5, 7; 55, 57) at least in the region (31, 62) of their poles (P$_1$, P$_3$), so that in the writing function, the outer magnetic legs (5, 7; 55, 57) are driven into magnetic saturation in the region (31, 62) of their poles (P$_1$, P$_3$) at least approximately sooner than the central magnetic leg (6, 56) because of a writing current flowing in the coil arrangement (18, 52).

3. Magnetic head according to claim 2, characterised in that the saturation magnetization (M$_{s2}$, M'$_{s2}$) of the central magnetic leg (6, 56) is, at least in the region (31, 62) of its pole (P$_2$), at least 20 %, preferably 30 %, greater compared to the saturation magnetization (M$_{s1}$, M'$_{s1}$, M$_{s3}$, M'$_{s3}$) of the outer magnetic legs (5, 7; 55, 57) at least in the region (31, 62) of their poles (P$_1$ or P$_3$).

4. Magnetic head according to claim 2 or 3, characterised in that at least one of the two outer magnetic legs (55, 57) has, apart from a first magnetic layer (58 or 60) with the comparatively lower saturation magnetization (M'$_{s1}$ or M'$_{s3}$), at least one additional magnetic layer (59 or 61) outside the region (62) of its pole (P$_1$ or P$_3$), the saturation magnetization (M'$_{s2}$) of this magnetic layer being greater than the lower saturation magnetization (M'$_{s1}$ or M'$_{s3}$) of the first magnetic layer (58 or 60) of this leg (55, 57).

5. Magnetic head according to claim 4, characterised in that the additional magnetic layer (59, 61) has a saturation magnetization (M'$_{s2}$) which is at least 20 %, preferably at least 30 %, greater than the saturation magnetization (M'$_{s1}$, M'$_{s3}$) of the first magnetic layer (58, 60).

6. Magnetic head according to one of claims 2 to 5, characterised in that a material with a saturation magnetization of less than 8 kA/cm, preferably below 5 kA/cm, is provided for the parts of the magnetic conductive body (16, 53) comprising the material with the comparatively lower saturation magnetization (M$_{s1}$, M$_{s3}$, M'$_{s1}$, M'$_{s3}$).

7. Magnetic head according to one of claims 2 to 6, characterised in that a material with a saturation magnetization of at least 10 kA/cm, preferably more than 11 kA/cm, is provided for the parts of the magnetic conductive body (16, 53) comprising the material with the comparatively higher saturation magnetization ($M_{s2}$, $M'_{s2}$).

8. Magnetic head according to one of claims 1 to 7, characterised in that its magnetic conductive body ($\underline{16}$, $\underline{43}$, $\underline{53}$) comprises at least partially a soft magnetic material.

9. Magnetic head according to one of claims 1 to 8, characterised in that its magnetic conductive body ($\underline{16}$, $\underline{43}$, $\underline{53}$) comprises a material whose easy magnetization is directed at least largely perpendicular to the conductive direction of the magnetic flux.

10. Magnetic head according to one of claims 1 to 9, characterised in that its magnetic conductive body ($\underline{16}$, $\underline{43}$, $\underline{53}$) comprises a material whose relative permeability ($u_r$) is at least 1500, preferably at least 2000.

11. Magnetic head according to one of claims 2 to 10, characterised in that the material with the lower saturation magnetization ($M_{s1}$, $M_{s3}$, $M'_{s1}$, $M'_{s3}$) is a Permalloy alloy.

12. Magnetic head according to one of claims 2 to 11, characterised in that the material with the higher saturation magnetization ($M_{s2}$, $M'_{s2}$) is a CoZr alloy or an FeB alloy or an FeSiRu alloy.

13. Magnetic head according to one of claims 1 to 12, characterised in that the two magnetic legs (41, 42) which are adjacent to the central magnetic leg (46) have, in a respective section (44 or 45), a predetermined small cross section, so that these sections (44, 45) are driven at least largely into magnetic saturation during the writing function by means of the writing current of the magnetic coil arrangement ($\underline{18}$) (Fig. 4).

14. Magnetic head according to claim 13, characterised in that the sections with a predetermined small cross section of the two magnetic legs adjacent to the central magnetic leg comprise the magnetic poles of these magnetic legs.

15. Magnetic head according to one of claims 1 to 14, characterised in that the magnetic poles ($P_1$, $P_3$) of the two magnetic legs (5, 7) adjacent to the central magnetic leg (6) are lengthened substantially further in the moving direction (v) of the magnetic head ($\underline{2}$; $\underline{32}$) than the magnetic pole ($P_2$) of the central magnetic leg (6).

16. Magnetic head according to one of claims 1 to 15, characterised in that the coil arrangement ($\underline{18}$) is formed by two at least largely planar coil windings ($\underline{19}$, $\underline{20}$).

17. Magnetic head according to one of claims 1 to 15, characterised in that the coil arrangement ($\underline{33}$; 52) comprises a coil winding arranged around the central magnetic leg (6; 56).

**Revendications**

1. Tête magnétique à couches minces ($\underline{2}$, $\underline{32}$, $\underline{40}$, $\underline{50}$) possédant une structure formée de couches, sur un substrat amagnétique (3) pour un support d'enregistrement (M), qui contient une couche de mémoire magnétisable (4), dans laquelle des informations doivent être enregistrées le long d'une piste au moyen d'une aimantation perpendiculaire (verticale), laquelle tête magnétique comporte
- un corps magnétique de guidage ($\underline{16}$, $\underline{43}$, $\underline{53}$) guidant le flux magnétique et comportant deux branches d'aimant extérieures (5, 6; 41, 42; $\underline{55}$, $\underline{57}$) et une autre branche d'aimant médiane ($\overline{6}$, 46, 56), les pôles ($P_1$, $P_2$, $P_3$), tournés vers le support d'enregistrement, de ces branches d'aimant étant disposés les uns derrière les autres lorsqu'on regarde dans la direction de déplacement (v) de la tête et les uns au-dessus des autres avec des largeurs d'entrefer (w, w') prédéterminées,
- et un dispositif ($\underline{18}$, $\underline{33}$, 52) à bobines d'enregistrement/lecture, dont les conducteurs (21, 24; 34, 35) s'étendent à travers l'un des espaces intercalaires (22, 25) formés entre la branche d'aimant médiane et respectivement l'une des branches d'aimant extérieures, qui sont voisines de la branche médiane, caractérisée par le fait que le dispositif à bobines ($\underline{18}$, $\underline{33}$, 52) comporte également des conducteurs (21, 24; 34, 35), qui s'étendent à travers l'autre espace intercalaire (22 ou 25), et que la branche d'aimant médiane (6; 46; 56) est essentiellement la seule branche d'aimant réalisant l'enregistrement, par le fait que les conducteurs (21, 24, 34, 35) sont disposés uniquement près de la branche d'aimant médiane, des deux côtés de cette dernière, et que les sens de circulation du courant sont réglés dans ces conducteurs, pour la fonction d'enregistrement, de telle manière que la branche d'aimant médiane est aimantée dans la même direction respective, en commun par lesdits conducteurs.

2. Tête magnétique suivant la revendication 1, caractérisée par le fait que la branche d'aimant médiane (6, 56) est constituée, au moins dans la zone (31, 62) de son pôle ($P_2$), par un matériau dont l'aimantation de saturation ($M_{s2}$, $M'_{s2}$) possède une valeur plus élevée que le ou les matériaux des autres branches d'aimant (5, 7, $\underline{55}$, $\underline{57}$) au moins dans la zone (61, 62) de leurs pôles ($P_1$, $P_2$), de sorte que dans la zone (31, 62) de leurs pôles ($P_1$, $P_3$), lors de la fonction d'enregistrement, les branches d'aimant extérieures (5, 7; $\underline{55}$, $\underline{57}$) fonctionnent au moins approximativement à la saturation magnétique, plutôt que la branche d'aimant médiane (6, 56), sous l'effet d'un courant d'enregistrement circulant dans le dispositif à bobines ($\underline{18}$, 52).

3. Tête magnétique suivant la revendication 2, caractérisée par le fait que l'aimantation de saturation ($M_{s2}$, $M'_{s2}$) de la branche d'aimant médiane (6, 56) est supérieure, au moins dans la région (31, 62) de son pôle ($P_2$), d'au moins 20 % et de préférence d'au moins 30 % aux aimantations de saturation ($M_{s1}$, $M'_{s1}$, $M_{s3}$, $M'_{s3}$) des branches d'aimant extérieures (5, 7; 55, 57) au moins dans la région (31, 62) de leurs pôles ($P_1$ ou $P_3$).

4. Tête magnétique suivant la revendication 2 ou 3, caractérisée par le fait qu'au moins l'une des deux branches d'aimant extérieures (55, 57) comporte, en dehors d'une première couche magnétique (58 ou 60) possédant une aimantation de saturation ($M'_{s1}$ ou $M'_{s3}$) comparativement faible à l'extérieur de la région (62) de son pôle ($P_1$ ou $P_3$), au moins une autre couche magnétique (59 ou 61), dont l'aimantation de saturation ($M'_{s2}$) est supérieure à l'aimantation de saturation plus faible ($M'_{s1}$ ou $M'_{s3}$) de la première couche magnétique (58 ou 60) de cette branche (55, 57).

5. Tête magnétique suivant la revendication 4, caractérisée par le fait que l'autre couche magnétique (59, 60) possède une aimantation de saturation ($M'_{s2}$), qui est au moins 20 % et de préférence au moins 30 % supérieure à l'aimantation de saturation ($M'_{s1}$, $M'_{s3}$) de la première couche magnétique (58, 60).

6. Tête magnétique suivant l'une des revendications 2 à 5, caractérisée par le fait que pour les parties du corps de guidage magnétique (16, 53) réalisées en un matériau possédant une aimantation de saturation ($M_{s1}$, $M_{s3}$, $M'_{s1}$, $M'_{s3}$) comparativement plus faible, il est prévu un matériau possédant une aimantation de saturation inférieure à 8 kA/cm et de préférence inférieure à 5 kA/cm.

7. Tête magnétique suivant l'une des revendications 2 à 6, caractérisée par le fait que pour les parties du corps de guidage magnétique (16, 53) réalisées en un matériau possédant une aimantation de saturation ($M_{s2}$, $M'_{s2}$) comparativement plus élevée, on prévoit un matériau possédant une aimantation de saturation égale à au moins 10 kA/cm et de préférence supérieure à 11 kA/cm.

8. Tête magnétique suivant l'une des revendications 1 à 7, caractérisée par le fait que son corps de guidage magnétique (16, 43, 53) est constitué au moins partiellement par un matériau magnétique doux.

9. Tête magnétique suivant l'une des revendications 1 à 8, caractérisée par le fait que son corps de guidage magnétique (16, 43, 53) est constitué en un matériau, dont l'aimantation facile est dirigée au moins dans une large mesure perpendiculairement à la direction de guidage du flux magnétique.

10. Tête magnétique suivant l'une des revendications 1 à 9, caractérisée par le fait que son corps de guidage magnétique (16, 43, 53) est réalisé en un matériau dont la perméabilité relative ($\mu_r$) est égale à au moins 1500 et de préférence à au moins 2000.

11. Tête magnétique suivant l'une des revendications 2 à 10, caractérisée par le fait que le matériau possédant l'aimantation de saturation ($M_{s1}$, $M_{s3}$, $M'_{s1}$, $M'_{s3}$) la plus faible est un alliage de permalloy.

12. Tête magnétique suivant l'une des revendications 2 à 11, caractérisée par le fait que le matériau possédant l'aimantation de saturation ($M_{s2}$, $M'_{s2}$) la plus élevée est un alliage de CoZr ou un alliage de FeB ou un alliage de FeSiRu.

13. Tête magnétique suivant l'une des revendications 1 à 12, caractérisée par le fait que les deux branches d'aimant (41, 42) voisines de la branche d'aimant médiane (46) possèdent chacune, dans une zone partielle (44 ou 45), une section transversale faible prédéterminée de sorte que ces zones partielles (44, 45) viennent, pendant la fonction d'enregistrement, au moins dans une large mesure à la saturation magnétique sous l'effet du courant d'enregistrement du dispositif à bobines magnétiques (18). (figure 4).

14. Tête magnétique suivant la revendication 13, caractérisée par le fait que les zones patielles possédant une section transversale faible prédéterminée des deux branches d'aimant voisines de la branche d'aimant médiane, entourent simultanément les pôles magnétiques de ces branches d'aimant.

15. Tête magnétique suivant l'une des revendications 1 à 14, caractérisé par le fait que les pôles magnétiques ($P_1$, $P_3$) des deux branches d'aimant (5, 7) voisines de la branche d'aimant médiane (6) sont nettement plus étendus que le pôle magnétique ($P_2$) de la branche d'aimant médiane (6), dans la direction de déplacement (v) de la tête magnétique (2; 32).

16. Tête magnétique suivant l'une des revendications 1 à 15, caractérisée par le fait que le dispositif à bobines (18) est formé par deux enroulements de bobines (19, 20) qui sont plats au moins dans une large mesure.

17. Tête magnétique suivant l'une des revendications 1 à 15, caractérisée par le fait que le dispositif à bobines (33; 52) est constitué par un enroulement de bobine disposé autour de la branche d'aimant médiane (10; 56).

FIG 1

FIG 3

FIG 2

FIG 4

FIG 5